Europäisches Patentamt

European Patent Office

Office européen des brevets

(11) Publication number: **0 248 547 B1**

# EUROPEAN PATENT SPECIFICATION

(45) Date of publication of patent specification: **30.10.91**  (51) Int. Cl.⁵: **B29C 67/22**, //B29L31:10, B29L9:00

(21) Application number: **87304177.6**

(22) Date of filing: **11.05.87**

(54) Method of manufacturing a sandwich panel.

(30) Priority: **22.05.86 GB 8612444**

(43) Date of publication of application:
**09.12.87 Bulletin 87/50**

(45) Publication of the grant of the patent:
**30.10.91 Bulletin 91/44**

(84) Designated Contracting States:
**DE ES FR IT NL SE**

(56) References cited:
**GB-A- 1 426 723**
**NL-A- 7 300 557**
**US-A- 3 668 031**
**US-A- 3 846 525**

(73) Proprietor: **HUNTER DOUGLAS INDUSTRIES B.V.**
**Piekstraat 2**
**NL-3071 WL Rotterdam(NL)**

(72) Inventor: **De Beste, Willem Hendrik**
**Albert Schweitzerplantsoen 30**
**NL-9301 HB Roden(NL)**

(74) Representative: **Allen, William Guy Fairfax**
**J.A. KEMP & CO. 14 South Square Gray's Inn**
**London WC1R 5EU(GB)**

## Description

The present invention relates to a method of manufacturing a sandwich panel having two rigid or semi-rigid skins with a foam interior between the skins. Typically such skins are formed of aluminium copper or the like filled with a foam insulation material, such as polyurethane or a similar foam.

The foam material may be obtained by mixing two components, such as polyisocyanate with a mixture containing polyol. The polyol mixture itself is often obtained by adding a catalyst and blowing agent, such as freon to the polyol and further additives may be provided to suit particular needs. The mixing of the isocyanates starts the foaming reaction and therefore this mixture should only take place directly preceding the distribution into the interior of the panel.

Said polyurethane foam compound obtained has reactions in three stages:-

1. There is firstly a liquid stage in which the foam forming material has a creamy nature;

2. Secondly the material goes through the expansion stage, in which the compound expands to a cellular condition;

3. Finally there is a curing stage in which the compound cures to a fully thermoset condition.

Various proposals have been made for distributing the foam forming material into the space between the skins forming the outside walls of the sandwich panel, a typical example is that shown in United States Patent 3846525 which includes mounting the skins in spaced, substantially parallel vertical relation, with a panel edge member between the gap between the lower edges of said skins, introducing at least one nozzle between the upper edges of said skins and introducing a liquid foam forming material between the inner surfaces of said skins. It has been found in order to obtain sufficient bonding of the foam material to the outer skins, as well as sufficient foam density for structural strength, it is necessary to introduce the foam forming material in repetitive passes, while obtaining a series of successive layers. Such an operation is both time consuming and cumbersome. It has also been attempted to discharge the full amount of foam forming material in a single pass, but the problem then arises that the bonding of the foam material to the skins and the foam density are usually found to be totally inadequate.

It is proposed, according to the present invention, to provide a method of manufacturing a sandwich panel having two rigid or semi-rigid skins with a foam interior between the skins, said method being characterised in that the liquid foam forming material is projected laterally against the inner surfaces of the skins, adjacent the upper edges thereof, allowing said liquid to flow downwardly to wet substantially the entire inner surface of each of the skins and continuing to project said liquid foam forming material until, adequate liquid has been introduced into the space between the skins to obtain the desired foam interior under the prevailing conditions, in that the gap between the upper edges of said skins is closed and in that the foam forming material is allowed to expand and fill the space between said skins.

It has been found that the wetting of the inner surfaces of the skins and of a member bridging the skins at the bottom of the mould, in the liquid stage of the foam forming material guarantees the best obtainable bonding between the foam and the skins. It has also been found that distribution in this manner results in a more homogeneous cell structure, with the lowest density foam material at the very centre, and the higher density, stronger material being at the outside and being firmly bonded to the skins.

Preferably the temperature prevailing is controlled so that sufficient foam forming material remains in the liquid state to reach and wet said panel edge member before the expansion stage of all of said foam forming material begins. Advantageously, also, the mixture of the foam forming material is chosen so that sufficient foam forming material remains in the liquid state to reach and wet said panel edge member, before the expansion stage of all of said foam forming material begins.

It is desirable that the extent to which the nozzle projects into the space between the skins should remain substantially constant and indeed that the nozzle should be moved longitudinally of the panel skins parallel to the upper edges of these skins.

While the apertures formed in the nozzle for laterally projecting the liquid may take many forms, they preferably are aligned with one another with their edges perpendicular to the inner surfaces of the skins so that the foam forming liquid is projected directly towards the confronting inner surfaces of the skin. It is also contemplated that the nozzle could take other forms and could be directed in a conical or generally divergant spray, but it is important that the upper parts of the inner surfaces of the skins should be thoroughly wetted and that the foam forming material in its liquid state should be free to run down and wet the whole of the inner surfaces of these skins.

In order that the present invention may be more readily understood, the following description is given, merely by way of example, reference being made to the accompanying drawing in which:-

Figure I is a schematic cross-section illustrating the carrying out of the methods of the invention; and

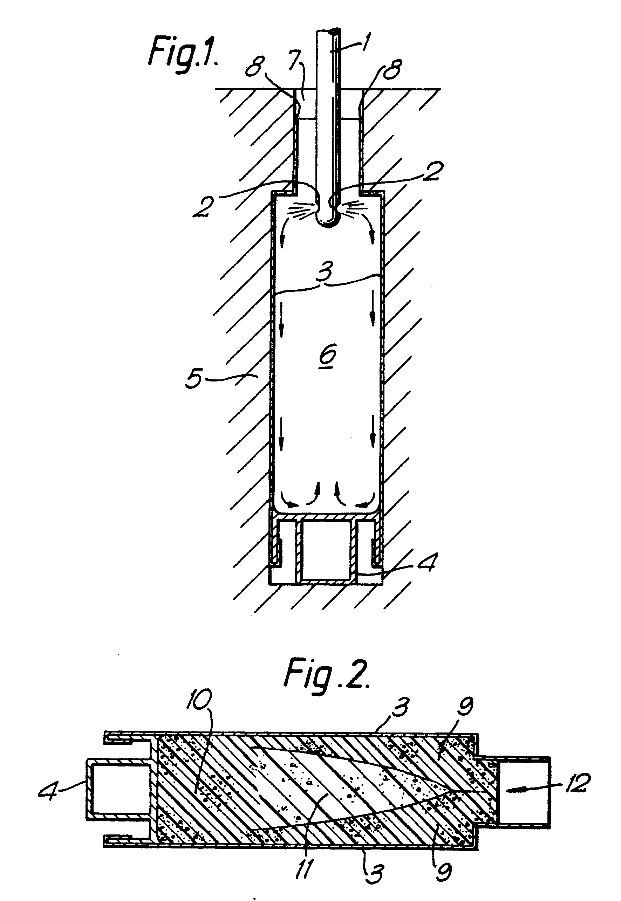

Figure 2 is a schematic cross-section through a panel formed using the method of the invention.

Referring first to Figure I there is illustrated therein a vertically extending nozzle (I) having two lateral apertures (2) the axis of which extend perpendicular to the axis of the nozzle (I). The nozzle (I) is illustrated in the drawings as being fed between the upper edges of two aluminium semi-rigid skins (3) which are bridged at the bottom by a profiled spacer member (4), the bottom edges of the skins (3) being wrapped around parallel flanges of this member (4). The skins are mounted in a mould (5) so as to be substantially vertical and parallel to one another. The skins define between them a generally rectangular vertical space (6) having a narrowed mouth (7) at the upper edges (8) of the skins (3).

In carrying out the method of the invention, the nozzle is located substantially in the position shown and a foam forming mixture consisting of Polyol and Polyisocyanate in a ratio of between I:I and I:6 is used. The Poly-Isocyanate may, for example, be Polymethyl Di-Isocyanate or Poly-Isocyanurate and may include a propellant such as Freon.

The mixture is fed to the nozzle at a feed pressure of between I and I0 bar and at a temperature between I5 and 30 degrees with the mould temperature between 20 and 45° C. The foam forming mixture preferably has a viscosity in the range of 200 and 20,000 centipoises and remains in the liquid stage for between 5 and 20 seconds. The expansion stage of the foam forming material is between 30 and I50 seconds.

The nozzle is caused to move longitudinally, that is perpendicular to the plane of the paper so that the vertical position of the nozzle remains substantially constant and as shown in the drawing.

After filling an adequate quantity of foam forming material into the space (6) so that this space will be completely full after expansion, a cover (not shown) is placed over the upper edge of the opening (7) in a similar manner to the bridging member (4).

After the cover has been put in place, the foam is allowed to cure for between 3 and 25 minutes and this produces a foam density of between 40 and 70 kg per metre$^3$ and the compression strength of the foam is between I0 and 30 N per cm$^2$ and its shared strength between 8 and 30 N per cm$^2$.

Figure 2 shows the resulting product from which can be seen that the wetting of the whole outer circumference of the cavity (6) in the liquid stage of the foam forming material guarantees the best obtainable bonding between the foam (9,I0) and the skins (3). The distribution in this manner results in a more homogenous cell structure, the lowest density portion (11) being in the center.

High density foam as a rule has more strength than lower density foam and the same high density is achieved at the open panel end (I2), where the mould has been closed by the cover member (not shown) during the foaming reaction.

## Claims

1. A method of manufacturing a sandwich panel having two rigid or semi-rigid skins (3) with a foam interior between the skins, said method comprising mounting the skins in spaced, substantially parallel vertical relation, with a panel edge member (4) between the gap between the lower edges of said skins, introducing at least one nozzle (1) between the upper edges of said skins and introducing liquid foam forming material downwardly between the inner surfaces of said skins, characterised in that the liquid foam forming material is projected laterally against the inner surfaces of the skins, adjacent the upper edges thereof, allowing said liquid to flow downwardly to wet substantially the entire inner surface of each of the skins and continuing to project said liquid foam forming material until adequate liquid has been introduced into the space between the skins to obtain the desired foam interior under the prevailing conditions, in that the gap between the upper edges of said skins is closed and in that the foam forming material is allowed to expand and fill the space between said skins.

2. A method according to claim 1, characterised in that the temperature prevailing is controlled so that sufficient foam forming material remains in the liquid state to reach and wet said panel edge member before the expansion stage of all of said foam forming material begins.

3. A method according to claim 1 or 2, characterised in that the mixture of said foam forming material is chosen so that sufficient foam forming material remains in the liquid state to reach and wet said panel edge member, before the expansion stage of all of said foam forming material begins.

4. a method according to claim 1, 2 or 3, characterised in that the extent to which said nozzle projects into the space between said skins remains substantially constant.

5. A method according to any preceding claim, characterised in that the nozzle is moved longitudinally of the panel skins parallel to the upper edges thereof.

6. A method according to any preceding claim, characterised in that the nozzle has two laterally directed apertures (2) whereby the foam forming liquid is projected directly towards the confronting inner surfaces of the skins.

**Revendications**

1. Procédé de fabrication d'un panneau stratifié comportant deux peaux rigides ou semi-rigides (3) avec un intérieur de mousse entre les peaux, ledit procédé comprenant le montage des peaux en positions verticales espacées et sensiblement parallèles, un élément de bord de panneau (4) étant situé dans l'interstice entre les bords inférieurs desdites peaux, l'introduction d'au moins une buse (1) entre les bords supérieurs desdites peaux, et l'introduction d'un matériau liquide moussant vers le bas entre les surfaces intérieures desdites peaux, caractérisé en ce que le matériau liquide moussant est projeté latéralement contre les surfaces intérieures des peaux, au voisinage de leur bord supérieur, en ce qu'on laisse ledit liquide s'écouler vers le bas pour mouiller sensiblement la totalité de la surface intérieure de chacune des peaux, et en ce qu'on continue de projeter ledit matériau liquide moussant jusqu'à ce qu'une quantité adéquate de liquide ait été introduite dans l'espace séparant les peaux afin d'obtenir l'intérieur mousseux souhaité dans les conditions ambiante, en ce que l'espace séparant les bords supérieurs desdites peaux est refermé et en ce que le matériau moussant est amené à se dilater et à remplir l'espace séparant lesdites peaux.

2. Procédé selon la revendication 1, caractérisé en ce que la température ambiante est régulée de façon à ce qu'une quantité suffisante de matériau moussant reste à l'état liquide pour atteindre et mouiller ledit élément de bord de panneau avant que le stade d'expansion de la totalité dudit matériau moussant ne commence.

3. Procédé selon la revendication 1 ou 2, caractérisé en ce que le mélange dudit matériau moussant est choisi de façon à ce qu'une quantité suffisante de matériau moussant reste à l'état liquide pour qu'il atteigne et mouille ledit élément de bord de panneau, avant que le stade d'expansion de la totalité dudit matériau moussant ne commence.

4. Procédé selon la revendication 1, 2 ou 3, caractérisé en ce que la distance à laquelle ladite buse pénètre dans l'espace séparant lesdites peaux reste sensiblement constante.

5. Procédé selon l'une quelconque des revendications précédentes, caractérisé en ce que la buse est déplacée dans le sens de la longueur des peaux du panneau parallèlement à leurs bords supérieurs.

6. Procédé selon l'une quelconque des revendications précédentes, caractérisé en ce que la buse présente deux ouvertures dirigées latéralement (2) ce qui permet de projeter le liquide moussant directement vers les surfaces intérieures opposées des peaux.

**Patentansprüche**

1. Ein Verfahren zur Herstellung einer Verbundplatte mit zwei starren oder halbstarren Häuten (3) mit zwischen den Häuten eingebettetem Schaum, wobei das genannte Verfahren darin besteht, daß die Häute in einem Abstand zueinander, im wesentlichen parallel und vertikal mit einem Plattenkantenelement (4) in der Spalte zwischen den unteren Kanten der genannten Häute eingebaut werden, indem wenigstens eine Düse (1) zwischen den Oberkanten der genannten Häute eingesetzt und flüssiges Schaumformmaterial nach unten zwischen die Innenflächen der genannten Häute eingeführt wird, **dadurch gekennzeichnet,** daß das flüssige Schaumformmaterial seitlich gegen die Innenflächen der Häute, in Nähe von deren Oberkanten, eingespritzt wird, wobei die genannte Flüssigkeit die Möglichkeit hat, nach unten zu fließen und im wesentlichen die gesamte Innenfläche jeder der Häute zu benetzen, und wobei das genannte flüssige Schaumformmaterial weiter eingespritzt wird, bis sich im Raum zwischen den Häuten ausreichend Flüssigkeit befindet, um die gewünschte Schauminnenauskleidung unter den vorherrschenden Bedingungen zu erzielen, daß der Spalt zwischen den Oberkanten der genannten Häute geschlossen ist und daß Schaumformmaterial sich ausdehnen und dadurch den Raum zwischen den genannten Häuten ausfüllen kann.

2. Ein Verfahren nach Anspruch 1, **dadurch gekennzeichnet,** daß die vorherrschende Temperatur so geregelt ist, daß ausreichend Schaumformmaterial in flüssigem Zustand verbleibt, um das genannte Plattenkantenelement zu erreichen und zu benetzen, bevor die Expansionsstufe des gesamten erwähnten Schaumformmaterials beginnt.

3. Ein Verfahren nach Anspruch 1 oder 2, **dadurch gekennzeichnet,** daß das Gemisch für das genannte Schaumformmaterial so gewählt, daß ausreichend Schaumformmaterial in flüssigem Zustand übrig bleibt, um das genannte Plattenkantenelement zu erreichen und zu benetzen, bevor die Expansionsstufe des gesamten erwähnten Schaumformmaterials beginnt.

4. Ein Verfahren nach Anspruch 1, 2 oder 3, **dadurch gekennzeichnet,** daß das Ausmaß, in dem die genannte Düse in den Raum zwischen den genannten Häuten hineinragt, im wesentlichen konstant bleibt.

5. Ein Verfahren nach einem der vorherigen Ansprüche, **dadurch gekennzeichnet,** daß die Düse längs den Plattenhäuten parallel zu deren Oberkanten bewegt wird.

6. Ein Verfahren nach einem der vorherigen Ansprüche, **dadurch gekennzeichnet,** daß die Düse zwei zur Seite hin gerichtete Öffnungen (2) aufweist, wodurch die Schaumformflüssigkeit direkt auf die davorliegenden Innenflächen der Häute gespritzt wird.

Fig.1.

Fig.2.